(19) Europäisches Patentamt / European Patent Office / Office européen des brevets

(11) **EP 1 316 342 B1**

(12) **EUROPEAN PATENT SPECIFICATION**

(45) Date of publication and mention
of the grant of the patent:
**17.01.2007 Bulletin 2007/03**

(51) Int Cl.:
***A63F 13/10*** *(2006.01)*

(21) Application number: **02026104.6**

(22) Date of filing: **22.11.2002**

(54) **Recording medium storing image display program, image display method, video game machine, and image display program**

Aufzeichnungsmedium für Bilddarstellungsgerät, Bilddarstellungsverfahren, Videospielvorrichtung und Bilddarstellungsprogramm

Support d'enregistrement pour programme d'affichage d'image, méthode d'affichage d'image et programme d'affichage d'image

(84) Designated Contracting States:
**DE FR GB**

(30) Priority: **28.11.2001 JP 2001363296**

(43) Date of publication of application:
**04.06.2003 Bulletin 2003/23**

(73) Proprietor: **Konami Corporation
Chiyoda-ku,
Tokyo (JP)**

(72) Inventor: **Mori, Takanori
Konami Comp. Entertainment Osaka
Osaka-shi
Osaka (JP)**

(74) Representative: **Müller-Boré & Partner
Patentanwälte
Grafinger Strasse 2
81671 München (DE)**

(56) References cited:
**EP-A- 0 680 776**        **US-A1- 2001 043 224**

• **PATENT ABSTRACTS OF JAPAN vol. 1996, no. 08, 30 August 1996 (1996-08-30) & JP 08 087267 A (SEGA ENTERP LTD), 2 April 1996 (1996-04-02)**

**Description**

**BACKGROUND OF THE INVENTION**

**1. Field of the Invention**

The present invention relates to a recording medium which stores an image display program, an image display program, an image display method, and a video game machine for displaying objects on the game screen according to the progressing status of the game.

**2. Description of the Related Art**

Video game machines, with which players can play video games controlling characters who play sports and the like in the video game space, have been known. Such video games include such sports games as skiing, surfing, skateboarding and snowboarding. Such video games progress as objects, which are characters controlled by a player, move in a preset course.

Methods of displaying such objects include a method for displaying an object comprised of polygons, for example, as a three-dimensional image, and a method for creating two-dimensional (hereinafter "2D") images in accordance with the operation of the object in advance, and displaying the object as a 2D image according to the progress of the game.

There are two types of video game machines used at home: stationary type high function models and portable type low function models with a simple hardware configuration. The high function type video game machines have a highly advanced operation performance where the method for displaying objects as three-dimensional images is mainly used, but for the low function type video game machines, operation performance and storage capacity are low in comparison with the high function models so as to implement portability, low cost and downsizing, therefore the method for displaying objects as 2D images is mainly used.

In order to implement realistic video games in accordance with the detailed movement of objects with the above mentioned method of displaying the objects as 2D images, a large volume of 2D images are required. However, with the low function type video game machines, where storage capacity is limited, storing a large volume of 2D images is difficult, and therefore it is difficult to implement realistic video games corresponding to the detailed operations of objects.

EP-A-0 680 776 discloses a display control method used to control the appearance of a game character for a video game during a movement of the character along a passage shown on a display screen. This method is used in a video game machine including an image control unit, a digital memory and a display screen, and consists of the following steps of displaying a passage for one section which has an inclined road surface, a game character in a normally standing state on at least one point on the road and a game character in an inverted state on at least one other point on the same road; storing patterns of a plurality of kinds of animation images for expressing the appearance of the character in various positions on the inclined road surface of the passage during the movement of the character along the inclined road surface; tracing the position of the character on the inclined road surface of the passage during the movement of the character there along retrieving from a storage means patterns of animation images representing the image of the character in various positions on the inclined road surface of the passage; and displaying the character by using the retrieved pattern so that the character shows various appearances in various positions on the inclined road surface of the passage.

JP 08 087267 A discloses an image processor according to which a parameter register storing the parameter used for the coordinate transformation processing imparts the parameter to scroll picture transformation processing part and a frame buffer read-out control part. The frame buffer read-out control part executes rotary coordinate transformation processing when it receives the rotary parameter from the parameter register.

**SUMMARY OF THE INVENTION**

In order to solve the above problems, it is an object of the present invention to provide a recording medium storing an image display program, an image display program, an image display method, and a video game machine for displaying realistic images, just like three-dimensional images, using 2D images without storing a large volume of 2D images corresponding to the operations of the objects.

This object is solved by a recording medium having the features of claim 1, an image display method having the features of claim 4, a video game machine having the features of claim 5, and an image display program having the features of claim 6. Prefered embodiments of the invention are defined in the subclaims.

In order to achieve the above objects, according to one a recording medium which stores an image display program to display objects to be displayed on a game screen according to the progressing status of a game, which causes a video game machine to function, as storage means for storing object images which are 2D images created in advance according to the progressing direction of said objects, selection means for selecting said object image based on a perspective transformation with a virtual camera view point as the basis for generating a game screen according to the progressing status of the game, transformation processing means for transforming said selected object image according to the result of said perspective transformation, and display means for displaying said transformed object image.

According to the present invention as described, the image display program stored in the recording medium (or computer-readable recording medium), for displaying objects to be displayed on a game screen according to the progressing status of a game, causes the video game machine to function as storage means for storing object images which are 2D images created in advance according to the progressing direction of the objects, selection means for selecting the object image based on a perspective transformation with a virtual camera view point as the basis for generating a game screen according to the progressing status of the game, transformation processing means for transforming the selected object image according to the result of the perspective transformation, and display means for displaying the transformed object image.

In other words, the storage means stores object images which are two-dimensional (hereinafter "2D") images created in advance according to the progressing direction of the objects to be displayed on the game screen, the selection means selects an object image based on a perspective transformation with a virtual camera view point as the basis for generating a game screen according to the progressing status of the game, the transformation processing means transforms the selected object image according to the result of the perspective transformation, and the display means displays the transformed object.

Therefore, since an object image, which is a 2D image selected based on perspective transformation, is transformed and displayed so that the front side of the object image becomes larger than the rear side thereof in the game space, realistic stereoscopic representation, such as a three-dimensional image, becomes possible using 2D images. Also an object image created in advance is transformed according to the result of the perspective transformation and displayed as another object image, so a plurality of object images can be displayed by preparing a small volume of object images, which makes it unnecessary to store a large volume of 2D images corresponding to the operations of the object, and allows saving storage capacity.

These and other objects, features, and advantages of the present invention will become more apparent upon reading the following detailed description along with the accompanying drawings.

**BRIEF DESCRIPTION OF THE DRAWINGS**

Fig. 1 is a diagram depicting an external view of a video game machine according to an embodiment of the present invention;

Fig. 2 is a block diagram depicting a general configuration of the hardware of this video game machine;

Fig. 3 is a block diagram depicting the major functions of the video game machine shown in Fig. 2;

Fig. 4 is a diagram depicting an example of character images and snowboard images;

Fig. 5 is a flow chart depicting an example of image display processing;

Fig. 6 is a flow chart depicting an example of selection processing for a character image and snowboard image in the step S3 in Fig. 5;

Fig. 7 is a diagram depicting calculation processing for calculating the angle of the progressing direction of the character object, angle to look down on the character object from the virtual camera view point, and rotation angle;

Fig. 8 is a diagram depicting selection processing for selecting a character image and snowboard image from the angle of the progressing direction of the character object;

Fig. 9 is a diagram depicting a method for calculating magnification based on the angle to look down on the snowboard object from the virtual camera view point;

Fig. 10 is a diagram depicting an example of the game screen where the character object and snowboard object are displayed;

Fig. 11 is a diagram depicting an example of the game screen where the character object and snowboard object shown in Fig. 10 are moved in the right direction and displayed; and

Fig. 12 is a diagram depicting an example of the game screen where an enlarged and rotated snowboard object is displayed.

**DESCRIPTION OF THE PREFERRED EMBODIMENTS**

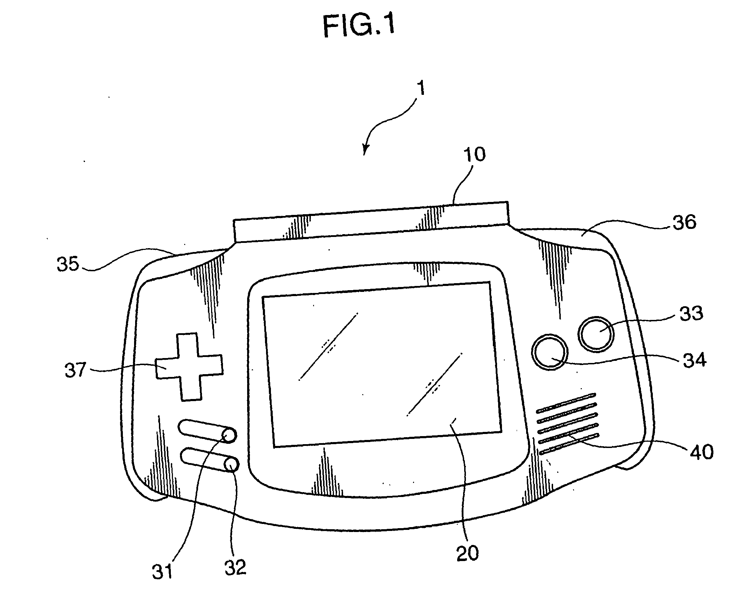

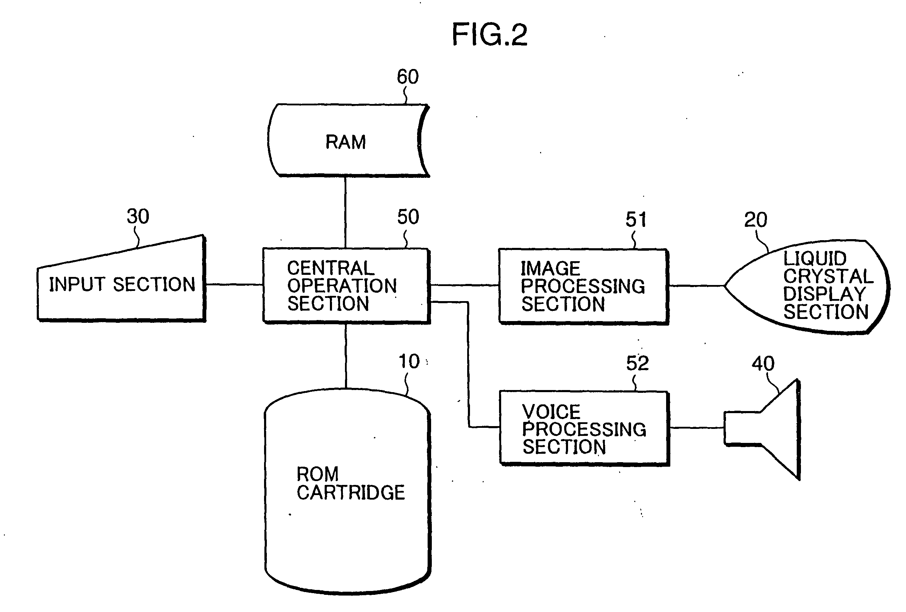

Fig. 1 is a diagram depicting an external view of a video game machine according to an embodiment of the present invention. Fig. 2 is a block diagram depicting a general description of the hardware of this video game machine.

In the following description, a portable type video game machine used at home is described as an example of a video game machine, but the present invention is not limited to this example, but can be applied in the same way to a stationary type video game machine, a video game machine for commercial use, and a personal computer which functions as a video game machine by executing a video game program.

In this video game machine 1, a removable recording medium 10, where a game program for this video game and image data and voice data used for the game program are recorded, is set when a player plays a specific video game. In the present embodiment, this recording medium 10 is a ROM (Read Only Memory) cartridge, for example. For the recording medium, a CD-ROM, DVD-ROM or flexible disk may also be used, and the above game program is read by the respective dedicated drive. Based on the game program of the ROM cartridge 10, input by the player is received via the start button 31, select button 32, A button 33, B button 34, L button 35, R button 36, and Plus key 37 (hereinafter simply "+ key") or the like, and according to these controls, the video game progresses, and images are displayed on the liquid crystal display section 20, and voice is regenerated via the speaker 40 based on the image data and voice data.

Data generated during the execution of the video game is stored in the RAM 60 when necessary, and while input is received via the input section 30 where the above mentioned buttons 31 - 36 and the + key 37 are disposed, the central operation section 50 comprised of the CPU (Central Processing Unit) sequentially executes the program in the ROM cartridge 10 to progress the video game. Processing unique to the images is executed by the image processing section 51, and the images are displayed on the liquid crystal display section 20, and processing unique to voice is executed by the voice processing section 52, and voice is regenerated via the speaker 40. The image processing section 51 executes transformation processing to scale and rotate various object images.

The image display program of the present invention is recorded in the ROM cartridge 10 shown in Fig. 2, just like the above mentioned game program, data generated during execution of the video game is stored in the RAM 60 when necessary, input is received via the input section 30 where the above mentioned buttons 31 - 36 and + key 37 are disposed, and the image display program of the ROM cartridge 10 is sequentially executed by the central operation section 50 to control the progress of the video game.

In the present embodiment, the case when the video game to be executed by the video game machine 1 is a snowboarding video game will be described. The snowboarding video game is a video game where the race is progressed by a character object on a snowboard object, who is a snowboarder controlled by the player, sliding on a preset snowboard course.

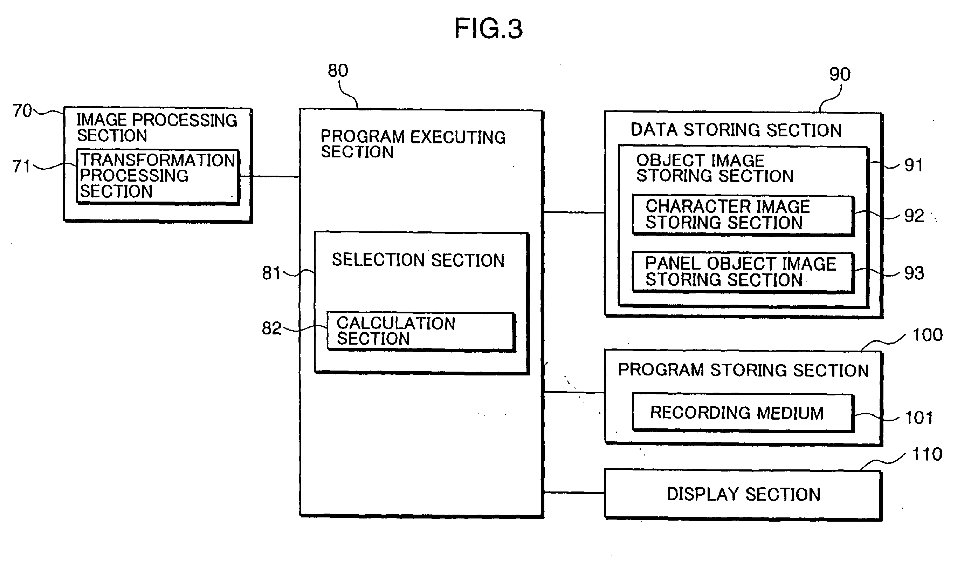

Fig. 3 is a block diagram depicting the major functions of the video game machine shown in Fig. 2. As Fig. 3 shows, the video game machine functionally comprises an image processing section 70, program executing section 80, data storing section 90, program storing section 100, and display section 110.

The program storing section 100 includes a computer readable recording medium 101. The recording medium 101 is implemented by a ROM cartridge 10, for example, and stores a game progress control program, including the image display program, as the game program. The game progress control program, including the image display program, is read from the recording medium 101, and if this program is recorded in the RAM 60, the RAM 60 functions as the program storing section 100.

The data storing section 90 is implemented by the RAM 60, for example, and functions as an object image storing section 91. The object image storing section 91 stores object images, which are 2D images created in advance according to the progressing direction of the objects. Objects in the present embodiment include a character object which represents a character, and a snowboard object, which represents a panel object that moves along with the character object, but the objects may be only character objects, or be only panel objects. The panel object is an object which thickness is smaller than the width, and may be a flat object or a 2D object which barely has thickness. The ratio of the width and the thickness of the panel object is preferably 10:1. The progressing direction of an object is a direction indicated by connecting a predetermined point in a game space of the object and the predetermined point which has moved as time elapses. The object image storing section 91 also includes a character image storing section 92, which stores 2D images on the character object, and a panel object image storing section 93, which stores 2D images on the panel object.

The character image storing section 92 stores character images, which are 2D images created in advance according to the progressing direction of the character object which represents a character to appear in a video game. This character image is prepared for nine directions, for example, with respect to the progressing direction of the character object.

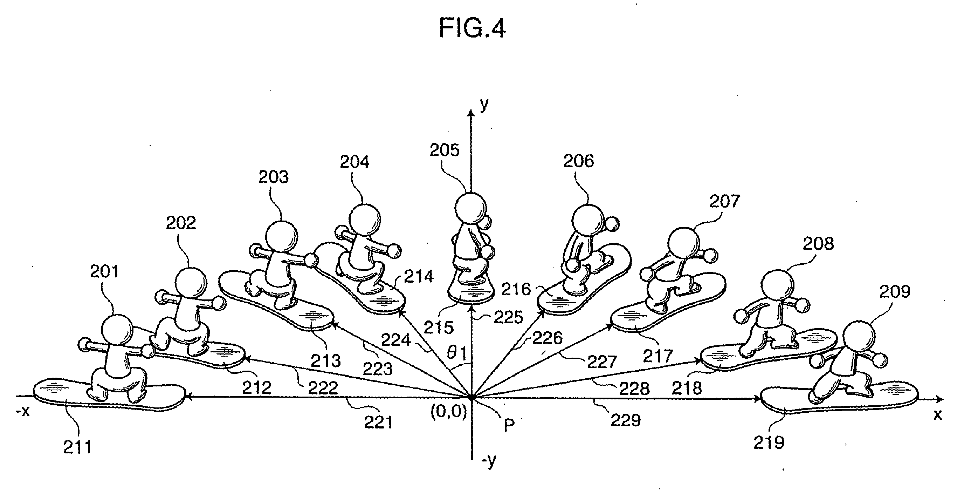

Fig. 4 is a diagram depicting an example of character images and snowboard images. As Fig. 4 shows, the character image storing section 92 stores the character images 201 - 209 according to the nine progressing directions 221 - 229 of the character object with the origin P (0, 0) as the reference. The x axis in Fig. 4 indicates the progressing direction of the character object and the snowboard object which move in a horizontal direction in the game space, the y axis indicates the progressing direction of the character object and the snowboard object which move in the front direction in the game space, where the angle formed by the progressing directions 221 - 229 of the character object and the snowboard object and the y axis is angle $\theta_1$.

The character image 201 is a 2D image which represents a character object that progresses in the left direction in the game space at $\theta_1 = 90°$ in the -x direction of the x axis, the character image 202 is a 2D image which represents a character object that progresses in the left front direction in the game space at $\theta_1 = 67.5°$ in the -x direction of the x axis, the character image 203 is a 2D image which represents a character object that progresses in the left front direction in the game space at $\theta_1 = 45°$ in the -x direction of the x axis, the character image 204 is a 2D image which represents the character object that progresses in the left front direction in the game space at $\theta_1 = 22.5°$ in the -x direction of the x axis, and the character image 205 is a 2D image which represents the character object that progresses in the front direction in the game space at $\theta_1 = 0°$ in the +y direction of the y axis. The character image 206 is a 2D image which represents the character object that progresses in the right front direction in the game space at $\theta_1 = 22.5°$ in the +x direction in the x axis, the character image 207 is a 2D image which represents the character object that progresses in the right front direction in the game space at $\theta_1 = 45°$ in the +x direction of the x axis, the character image 208 is a 2D image which represents a character object that progresses in the right front direction in the game space at $\theta_1 = 67.5°$ in the +x direction of the x axis, and the character image 209 is a 2D image which represents a character object that progresses in the right direction in the game space at $\theta_1 = 90°$ in the +x direction of the x axis.

The character images 201 - 209 corresponding to each progressing direction 221 - 229 may perform animation. For example, when a character image 201 - 209 in each progressing direction 221 - 229 performs such animation as moving the hand of a character object, the 2D image of a part corresponding to the hand of the character object is associated with each character image 201 - 209 in advance as animation data. The 2D image when the character object is raising its hand and the 2D image when the character object is lowering its hand are associated with each character image 201 - 209 in advance, and are alternately displayed as a movie. By each character image 201 - 209 performing animation like this, the detailed operation of the character object according to the progressing status of the game can be expressed, and a more realistic representation becomes possible.

The character image storing section 92 may store not character images corresponding to the nine progressing directions of the character object, but the character images corresponding to only the five progressing directions 221, 223, 225, 227 and 229, for example, which is less than nine directions, and in this case the storage capacity can be further decreased. Character images corresponding to more than the nine progressing directions may be stored, and in this case, a more detailed operation of the character object can be expressed, and a more realistic character object can be displayed.

The panel object image storing section 93 stores snowboard images, which are 2D images created in advance according to the progressing direction of the snowboard object, that is a panel object. These snowboard images are prepared for five directions with respect to the progressing direction of the snowboard object. As Fig. 4 shows, the panel object image storing section 93 stores snowboard images 211 - 215 corresponding to the five progressing directions 221 - 225 of the snowboard object.

The snowboard image 211 is a 2D image which represents a snowboard object that progresses in the left direction in the game space at $\theta_1 = 90°$ in the -x direction of the x axis, the snowboard image 212 is a 2D image which represents a snowboard object that progresses in the left front direction in the game space at $\theta_1 = 67.5°$ in the -x direction of the x axis, the snowboard image 213 is a 2D image which represents a snowboard object that progresses in the left front direction in the game space at $\theta_1 = 45°$ in the -x direction of the x axis, the snowboard image 214 is a 2D image which represents a snowboard object that progresses in the left front direction in the game space at $\theta_1 = 22.5°$ in the -x direction of the x axis, and the snowboard image 215 is a 2D image which represents the snowboard object that progresses in the front direction in the game space at $\theta_1 = 0°$ in the +y direction of the y axis.

The snowboard images 216 - 219 are displayed by inverting the snowboard images 211 - 214 stored in the panel object image storing section 93, and when the snowboard image 216 is displayed, for example, the snowboard image 214 is inverted symmetrically with respect to the y axis. In the same way, the snowboard image 217 can be displayed by inverting the snowboard image 213 with respect to the y axis, the snowboard image 218 is displayed by inverting the snowboard image 212 with respect to the y axis, and the snowboard image 219 is displayed by inverting the snowboard image 211 with respect to the y axis. The snowboard object which progresses in the -y direction of the y axis can be displayed by inverting the snowboard images 211 - 219 symmetrically with respect to the origin as a reference.

In this way, for an object image which can be naturally displayed after inversion, such as a snowboard image which is a panel object image, it is unnecessary to store 2D images corresponding to all of the progressing nine directions, for example, but panel objects in all the progressing directions can be displayed by storing only the 2D images corresponding to the five progressing directions, so storage capacity can be saved.

In the present embodiment, the snowboard images 211 - 215 are stored and the snowboard images 216 - 219 are displayed by inverting the snowboard images 211 - 214, but the present invention is not limited to this, and the snowboard images 215 - 219 may be stored and the snowboard images 211 - 214 may be displayed by inverting the snowboard images 216 - 219. The panel object image storing section 93 may store the snowboard images 211 - 219 for all nine directions, not only the snowboard images 211 - 215 for five directions. In this case, even an object which became unnatural if the snowboard image is inverted, such a snowboard object on which characters or pictures are drawn, can be displayed.

The panel object image storing section 93 may store snowboard images corresponding to only three progressing directions, 221, 223 and 225, not snowboard images corresponding to the five progressing directions of the snowboard object, and in this case, storage capacity can be further saved. Snowboard images corresponding to more than five progressing directions may also be stored, and in this case, a more detailed movement of the snowboard object can be expressed, and a more realistic snowboard object can be displayed.

Referring to Fig. 3 again, the program executing section 80 is implemented by the central operation section 50, for example, and functions as the selection section 81.

The selection section 81 selects the character image which is stored in the character image storing section 92 and the snowboard image stored in the panel object image storing section 93 respectively, based on the perspective transformation with the virtual camera view point as the basis for generating a game screen according to the progressing status of the game. The selection section 81 includes a calculation section 82, which calculates a progressing direction angle which indicates an angle of the progressing direction of the character object and panel object based on the perspective transformation, a look down angle to look down on the character object or panel object from the virtual camera view point, and a rotation angle which indicates an angle to rotate the character object or panel object, and selects the character image and snowboard image according to the calculated progressing direction angle of the character object.

The image processing section 70 is implemented by the image processing section 51, for example, and functions as the transformation processing section 71. The transformation processing section 71 transforms the snowboard image selected by the selection section 81 according to the result of the perspective transformation. The transformation processing section 71 scales the snowboard image according to the look down angle calculated by the calculation section 82. The transformation processing section 71 rotates the character image and snowboard image according to the rotation angle calculated by the calculation section 82.

The display section 110 is implemented by the liquid crystal display section 20, for example, and displays the snowboard image transformed by the transformation processing section 71 along with the character image selected by the selection section 81.

In the present embodiment, the character image corresponds to the character object image, the snowboard image corresponds to the panel object image, the selection section 81 corresponds to the selection means, the calculation section 82 corresponds to the calculation means, the object image storing section 91 corresponds to the storage means, the transformation processing section 71 corresponds to the transformation processing means, and the display section 110 corresponds to the display means.

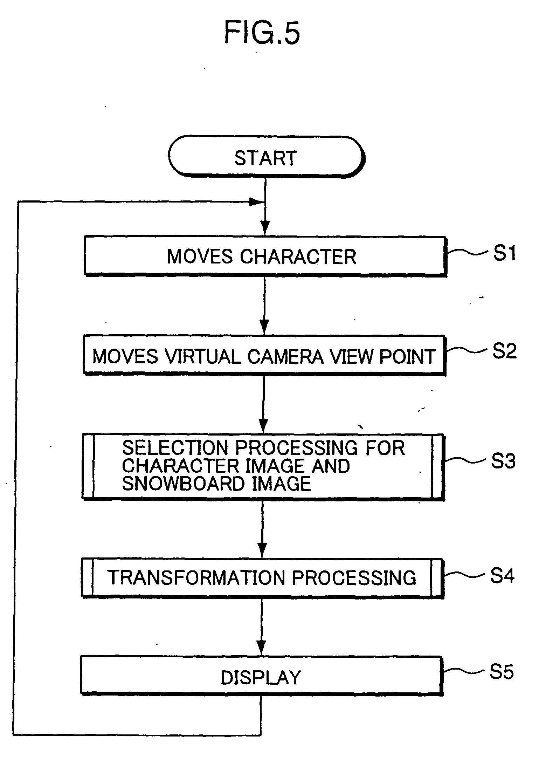

Fig. 5 is a flow chart depicting an example of image display processing, and the image display processing shown in Fig. 5 is executed by the central operation section 50 executing the image display program.

In step S1, the central operation section 50 moves the character object and snowboard object based on the operation by the player which is accepted by the input section 30.

In step S2, the central operation section 50 moves the virtual camera view point. In the present embodiment, the snowboard course, which is displayed as a background of the character, is displayed by regenerating the moving images, which are stored in advance regenerated as a movie. Therefore the virtual camera view point position has been preset, and the images are displayed as if the virtual camera view point relatively moves as the movie is regenerated.

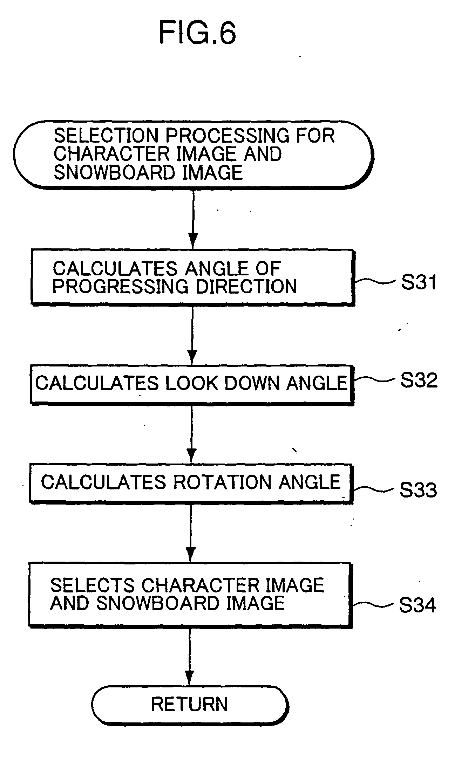

In step S3, the central operation section 50 executes selection processing of the character images and snowboard images to be displayed. This selection processing of the character images and snowboard images will be described later with reference to Fig. 6.

In step S4, the image processing section 51 executes transforming processing for transforming the snowboard image selected in step S3. In other words, when the magnification based on the look down angle calculated in step S32 in Fig. 6 is input, the image processing section 51 executes transformation processing for enlarging or shrinking the snowboard image selected in step S3 based on the magnification which was input. Also when the rotation angle calculated in step S33 in Fig. 6 is input, the image processing section 51 executes transformation processing for rotation the character image and the snowboard image selected in step S3 according to the rotation angle which was input.

In step S5, the liquid crystal display section 20 displays the snowboard image transformed in step S4 along with the character image selected in step S3.

The image display processing in the above steps S1 - S5 is executed for each frame, and the object according to the progressing status of the game is displayed by repeating this processing.

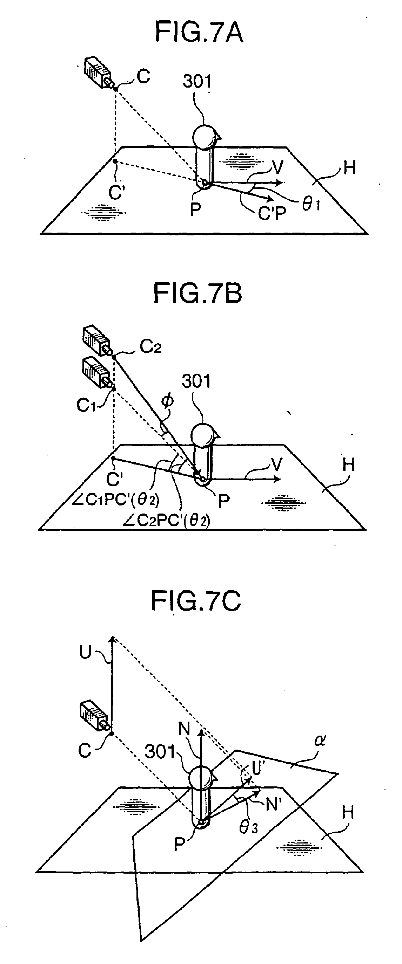

Fig. 6 is a flow chart depicting an example of the selection processing for the character image and snowboard image in step S3 in Fig. 5. Fig. 7 is a diagram depicting calculation processing for calculating the progressing direction angle which indicates the progressing direction of the character object based on the perspective transformation, look down angle to look down on the character object from the virtual camera view point, and rotation angle to rotate the character object.

In step S31, the central operation section 50 calculates the progressing direction angle to indicate the progressing direction of the character object. In the present embodiment, the progressing direction angle of the character object and the progressing direction angle of the snowboard object are the same.

Fig. 7A is a diagram depicting the calculation processing for calculating the angle of the progressing direction of the character object based on the perspective transformation. As Fig. 7A shows, it is assumed that the plane where a predetermined point P disposed at the foot of the character object 301 exists is the plane H, and a point when the virtual camera view point C for generating the game screen is projected on the plane H is the point C', and the angle between the vector V in the progressing direction of the character object 301 and the vector C'P is calculated as the progressing direction angle $\theta 1$, which indicates the angle in the progressing direction of the character object.

In step S32, the central operation section 50 calculates the look down angle to look down on the character object from the virtual camera view point. In the present embodiment, the look down angle to look down on the character object and the look down angle to look down on the snowboard object are the same.

Fig. 7B is a diagram depicting the calculation processing for calculating the look down angle to look down on the character object from the virtual camera view point based on the perspective transformation. The virtual camera view point C1 shown in Fig. 7B indicates the view point position of the character image and snowboard image stored in the object image storing section 91. The angle $\angle C1PC'$ formed by the line connecting this virtual camera view point $C_1$ and the predetermined point P disposed at the food of the character object 301, and the line connecting the point P and the point C', which is a point when the virtual camera view point $C_1$ is projected on the plane H where the point P exists, is regarded as the look down angle $\theta_2$ to look down on the character object 301 from the virtual camera view point $C_1$. When the virtual camera view point $C_1$ moves to the virtual camera view point $C_2$, the angle $\angle C_2PC'$ formed by the line connecting the virtual camera view point $C_2$ and the point P at the foot of the character object 301, and the line connecting the point P and the point 'C' is regarded as the look down angle $\theta_2$ to look down on the character object 301 from the virtual camera view point $C_2$. When the virtual camera view point $C_1$ moves to the virtual camera view point $C_2$, the snowboard image stored in the panel object image storing section 93 is scaled according to the difference of the angles $\phi$ between the angle $\angle C_2PC'$ and $\angle C_1PC'$, so that a realistic display, just like three-dimensional images, becomes possible using 2D images.

In step S33, the central operation section 50 calculates the rotation angle of the character object. In the present embodiment, the rotation angle to rotate the character object and the rotation angle to rotate the snowboard object are the same.

Fig. 7C is a diagram depicting calculation processing to calculate the rotation angle to rotate the character object based on the perspective transformation. As Fig. 7C shows, it is assumed that the plane where normal is the vector from a predetermined point P disposed at the foot of the character object 301 to the virtual camera view point C is the plane $\alpha$, the vector when the normal vector N of the point P at the foot of the character object 301 on the plane H where the point P exists is projected on the plane $\alpha$ is the vector N', and the vector U in the up direction of the virtual camera view point C is projected on the plane $\alpha$ is vector U'. The angle formed by the vector N' and the vector U' at this time is calculated as the rotation angle $\theta_3$ to rotate the snowboard object.

In step S34, the central operation section 50 selects a character image from the character images 201 - 209 stored in the character image storing section 92 (see Fig. 4) based on the progressing direction angle of the character object calculated in step S31, and selects a snowboard image from the snowboard images 211 - 215 stored in the panel object image storing section 93 and the snowboard images 216 - 219 which are obtained by inverting the snowboard images 211 - 214.

The processing in steps S1 - S5 and the processing in steps S31 - S34 in the present embodiment are not limited to the above mentioned procedure, but can be modified. For example, it is also acceptable that the progressing direction angle is calculated, a character image and snowboard image are selected, then the look down angle and rotation angle are calculated, and transformation processing is executed.

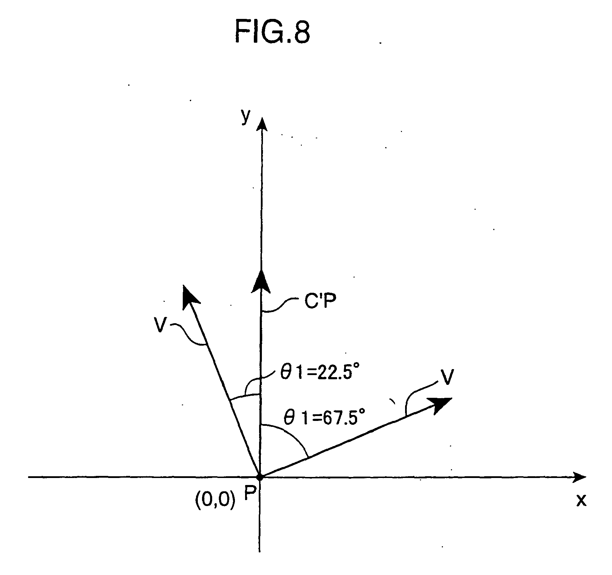

Fig. 8 is a diagram depicting the selection processing to select the character image and snowboard image based on the angle of the progressing direction of the character object. It is assumed that a predetermined point P, disposed at the foot of the character object 301 on the plane H shown in Fig. 7A, is the origin (0, 0), and the direction of the vector C'P is the +y direction of the y axis. If the angle $\theta_1$ formed by the vector V in the progressing direction of the character object 301 and the vector C'P is 22.5° in the -x direction, for example, the character image 204 and the snowboard image 214 (see Fig. 4) are selected, and if the angle $\theta_1$ is 67.5° in the +x direction, for example, the character image 208 and the snowboard image 218 (see Fig. 4) are selected.

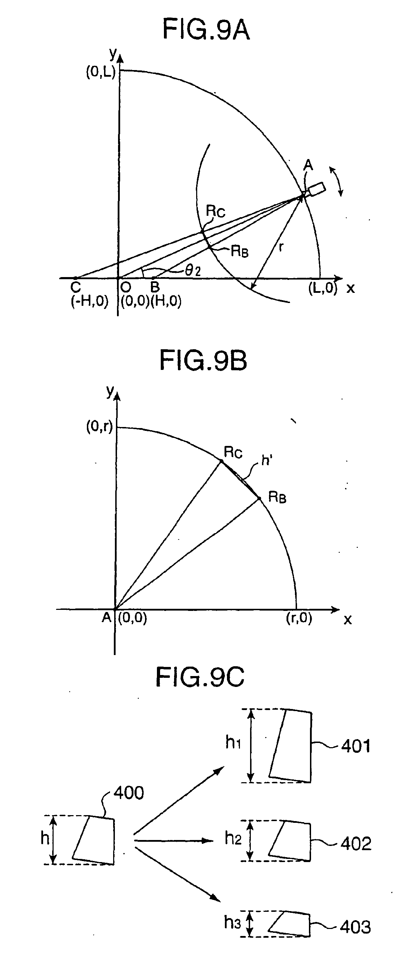

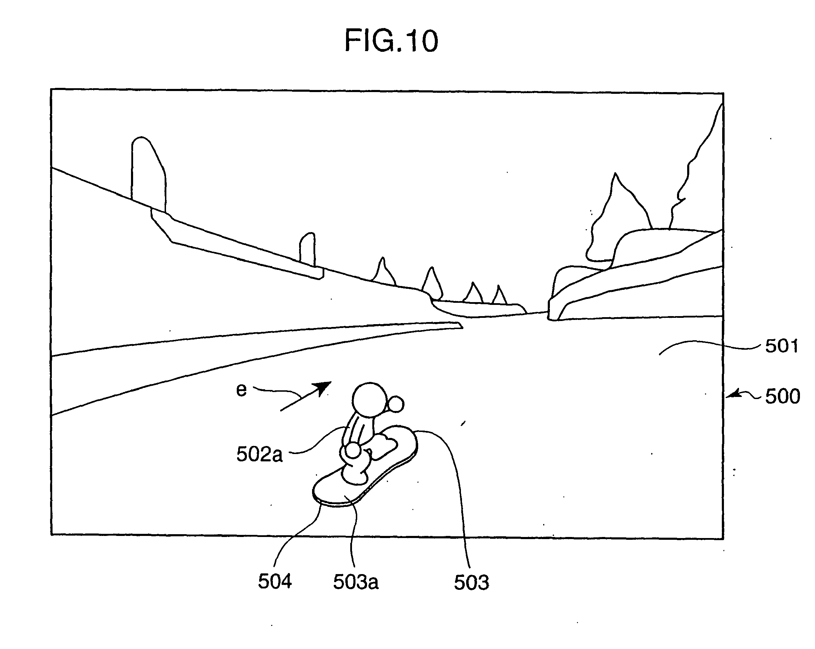

Fig. 9 is a diagram depicting a method of calculating the magnification based on the angle to look down on the snowboard object from the virtual camera view point. Fig. 9A is a view of the snowboard object and virtual camera from the side, where the center position of the snowboard object (a predetermined point P disposed at the foot of the character object 301) is the origin O (0, 0), the progressing direction of the snowboard object is the x axis, and the vertically up direction of the snowboard object in the game space is the y axis. The view point position of the virtual camera, which moves in the double arrow mark direction b on the arc with radius L with the origin O as the center, is the virtual camera view point A, the angle formed by the line AO and the x axis is the look down angle $\theta_2$, the rear end point of the snowboard object with respect to the depth direction in the game space (see reference numeral 504 in Fig. 10) is point B (H, 0), and the front end point of the snowboard object with respect to the depth direction in the game space (see reference numeral 503 in Fig. 10) is the point C (-H, 0).

Since the virtual camera view point A is on the arc with radius L with the origin O as the center, the coordinate of the virtual camera view point A can be given (Lcos$\theta_2$, Lsin$\theta_2$). The inclination of the line AO at this time is given by sin$\theta_2$/cos$\theta_2$, the inclination of the line AB is given by Lsin$\theta_2$/(Lcos$\theta_2$ + H), and the inclination of the line AC is given by Lsin$\theta_2$/(Lcos$\theta_2$ -H).

If the arc with the radius r with the virtual camera view point A as the center is the projection face P for displaying the snowboard object as the game screen, then the length of the snowboard object to be displayed on the game screen can be calculated by determining the distance between the intersection $R_C$ between the line AC and the projection face P, and the intersection $R_B$ between the line AB and the projection plane P.

Fig. 9B shows a diagram when the coordinate system shown in Fig. 9A is converted into the coordinate system where the origin (0, 0) is the virtual camera view point A. The equation of the circle is given by the following formula (1), the equation of the line connecting the virtual camera view point A and the intersection $R_B$ is given by the formula (2), and the equation of the line connecting the virtual camera view point A and the intersection $R_C$ is given by the formula (3).

$$x^2 + y^2 = r^2 \quad \cdot \ \cdot \ \cdot \ \cdot \ (1)$$

$$y = (Lsin\theta_2/(Lcos\theta_2 + H) \ x \ \cdot \ \cdot \ \cdot \ \cdot \ (2)$$

$$y = (Lsin\theta_2/(Lcos\theta_2 - H) \ x \ \cdot \ \cdot \ \cdot \ \cdot \ (3)$$

By substituting the formula (2) for the formula (1), the x coordinate of the intersection $R_B$ is given by the formula (4), and by substituting the formula (3) for the formula (1), the x coordinate of the intersection $R_C$ is given by the formula (5).

$$x = (r^2/(1+(Lsin\theta_2/(Lcos\theta_2 + H))^2))^{1/2} \ \cdot \ \cdot \ \cdot \ \cdot \ (4)$$

$$x = (r^2/(1+(Lsin\theta_2/(Lcos\theta_2 - H))^2))^{1/2} \ \cdot \ \cdot \ \cdot \ \cdot \ (5)$$

Furthermore, by substituting the formula (4) for the formula (1), the y coordinate of the intersection $R_B$ is given by the formula (6), and by substituting the formula (5) for the formula (1), the y coordinate of the intersection $R_C$ is given by the formula (7).

$$y = (((Lsin\theta_2/(Lcos\theta_2 + H))^2 \cdot r^2)/(1+(Lsin\theta_2/(Lcos\theta_2 +H))$$

$$^2))^{1/2} \ \cdot \ \cdot \ \cdot \ \cdot \ (6)$$

$$y = (((Lsin\theta_2/(Lcos\theta_2 - H))^2 \cdot r^2)/(1+(Lsin\theta_2/(Lcos\theta_2 - H))$$

$$^2))^{1/2} \ \cdot \ \cdot \ \cdot \ \cdot \ (7)$$

By determining the coordinates of the intersection $R_B$ and the intersection $R_C$ in this way, the length h' of the line segment connecting the intersection $R_B$ and the intersection $R_C$ can be calculated. For example, if the length of the line segment connecting the intersection $R_B$ and the intersection $R_C$ when the look down angle $\theta_2 = 45°$ is the length h of the snowboard image stored in the panel object image storing section 93, then the magnification can be calculated by dividing the calculated length h' of the line segment by the length h of the snowboard image stored in the panel object image storing section 93 (h'/h). The image is enlarged in the case of 1<h'/h, and the image is shrunk in the case of h'/h<1. By inputting this magnification into the transformation processing section 71, the snowboard image stored in the panel object image storing section 93 is scaled, and the snowboard image with the length according to this magnification is displayed on the game screen.

Fig. 9C is a diagram depicting an example of the snowboard image which is scaled by the image processing section 51. The snowboard image 400 shown in Fig. 9C is a 2D image stored in the panel object image storing section 93, and the snowboard images 401 - 403 are 2D images when the snowboard image 400 is scaled. The snowboard images 400 - 403 are images when the snowboard images which are actually displayed are simplified to simplify description. By scaling the length h of the snowboard image 400 in the progressing direction at magnification $h_1/h$, the enlarged snowboard image 401 with the length $h_1$ is created, by scaling the length h of the snowboard image 400 at magnification $h_2/h$, the shrunk snowboard image 402 with length $h_2$ is created, and by scaling the length h of the snowboard image 400 in the progressing direction at magnification $h_3/h$, the shrunk snowboard image 403 with length $h_3$ is created. In this way, by scaling only the length h of the snowboard image in the vertical direction without changing the length in the horizontal direction, the depth in the game space can be expressed and a realistic display, just like three-dimensional images, becomes possible using 2D images.

Figs. 10 - 12 are diagrams depicting an example of a game screen where a character object and a snowboard object are displayed.

On the game screen 500 shown in Fig. 10, the character object 502a on the snowboard object 503a is displayed as if sliding on a snowboard course 501, which is displayed as a moving picture, that is a movie, constituted by background objects, in the depth direction (arrow mark e direction). It is assumed that the front end portion of the snowboard object 503a with respect to the depth direction is the front end section 503, and the base end portion with respect to the depth direction is the rear end section 504. For the character object 502a, the character image 206 (see Fig. 4) is selected, and for the snowboard object 503a, the snowboard image 216 (see Fig. 4) is selected. In the present embodiment, the character objects and panel objects have priority in display, where the panel object is displayed in front of the background object, and the character object is displayed in front of the panel object. In a normal game screen, the character object 502a is displayed with higher priority than the snowboard object, just like the case of the game screen 500. In other words, when the character object 502a and snowboard object 503a overlap, the character object 502a is displayed in front of the snowboard object 503a. By assigning priority in a display like this, each object can be displayed naturally.

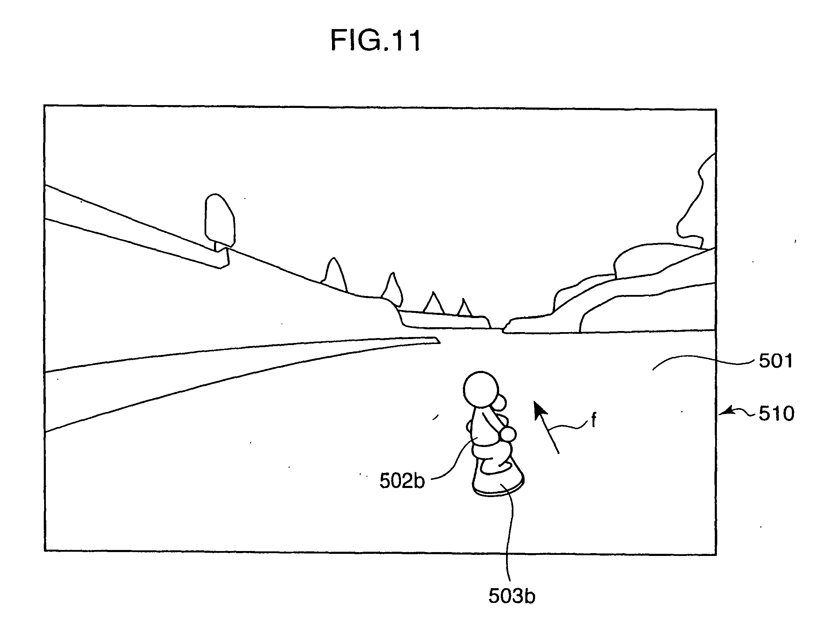

In the game screen 510 shown in Fig. 11, the player inputs the right direction via the + key 37, for moving the character object 502a and the snowboard object 503a shown in Fig. 10 to the right direction, then the character object 502b and the snowboard object 503b, which are the character object 502a and snowboard object 503a moved in the right direction, are displayed as if sliding in the depth direction (arrow mark f direction). For the character object 502b, the character image 205 (see Fig. 4) is selected by the selection section 81, and for the snowboard object 503b, the snowboard image 215 (see Fig. 4) is selected by the selection section 81.

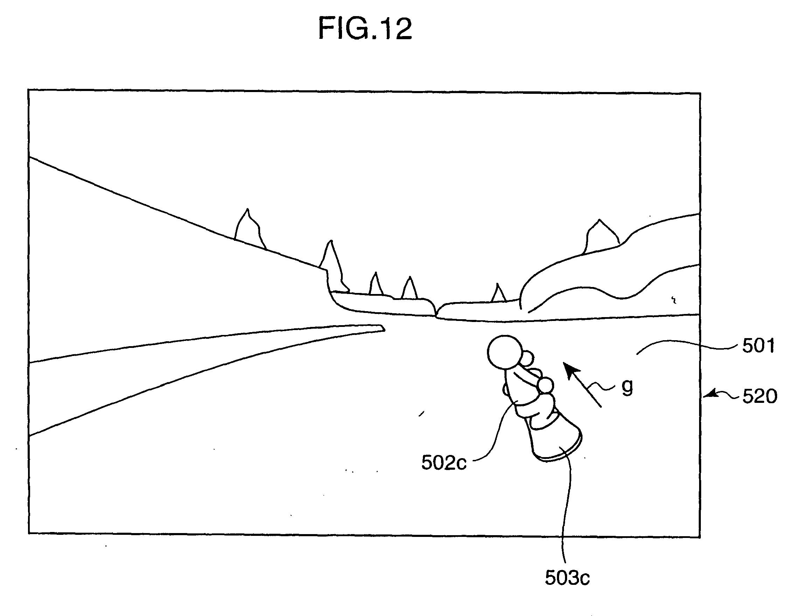

In the game screen 520 shown in Fig. 12, the player inputs the right direction via the + key 37 for moving the character object 502b and the snowboard object 503b shown in Fig. 11 to the right direction, then the character object 502c and the snowboard object 503c, which are character object 502b and snowboard object 503b, further moved in the right direction, are displayed as if sliding in the depth direction (arrow mark g direction). For the character object 502c, the character image 205 (see Fig. 4) is selected by the selection section 81, and for the snowboard object 503c, the snowboard image 215 (see Fig. 4) is selected by the selection section 81. Since the snowboard course 501 has hills, the snowboard object 503c is enlarged in the display, even if the snowboard image, the same as the snowboard object 503b shown in Fig. 11, is selected. The character object 503c and the snowboard object 502c are rotated to the left in the display, in comparison with the character object 503b and the snowboard object 502b shown in Fig. 11. In this way, by displaying the snowboard image as enlarged or rotated in a display, object images which change according to the game progressing status can be displayed.

In this way, the snowboard image, which is a 2D image selected based on the perspective transformation, is transformed and displayed so that the front side of the snowboard image is larger than the rear side thereof in the game space, so stereoscopic representation, like three-dimensional images, becomes possible. Also the snowboard object is displayed by transforming the snowboard image according to the result of the perspective transformation, so it is unnecessary to store a large volume of 2D images of the snowboard object, which decreases storage capacity, and allows implementing a realistic video game corresponding to the detailed operations of the object.

Since the progressing direction angle to indicate the angle of the progressing direction of the character object is calculated and a character object and snowboard object according to the calculated progressing direction angle are selected from the stored character images and snowboard object images, a character image and snowboard image according to the progressing direction of the character object and snowboard object are selected, and a character object and snowboard object according to the progressing status of the game can be displayed.

Also the lookdown angle to look down on the character object from the virtual camera view point is calculated, and the snowboard image is scaled according to the calculated look down angle, so a display with depth, such as three-dimensional images, becomes possible, even if the snowboard image is a 2D image.

Also the rotation angle to rotate the character object or snowboard object is calculated , and the character image and snowboard image are rotated according to the calculated rotation angle, so the character object and panel object can be displayed according to various rotation operations, and a variety of representations according to the progressing direction of the character object and panel object become possible.

In the present embodiment, a video game about snowboarding has been described, but the present invention is not limited to this, but can be applied to video games about other sports, such as skateboarding and skiing, or shooting games and role playing games.

In the description of the present embodiment, the objects include character objects, which represent characters, and snowboard objects, which represent panel objects that move along with the characters, but the present invention is not limited to this, but may be applied to objects constituted by only panel objects, for example.

Also in the present embodiment, only the panel objects, out of the character objects and panel objects, are transformed based on the perspective transformation, but the present invention is not limited to this, but the character objects along with the panel objects may be transformed based on the perspective transformation, or only character objects may be transformed based on the perspective transformation.

Also in the present embodiment, transformation processing was described as a function of the image processing section 51, but the present embodiment is not limited to this, but the transformation processing may be a function of the central operation section 50. In this case, the transformation processing is executed by the image display program.

In summary, the present invention relates to a recording medium storing an image display program to display objects to be displayed on a game screen according to the progressing status of a game, which causes a video game machine to function, as storage means for storing object images which are 2D images created in advance according to the progressing direction of said objects, selection means for selecting said object image based on a perspective transformation with a virtual camera view point as the basis for generating a game screen according to the progressing status of the game, transformation processing means for transforming said selected object image according to the result of said perspective transformation, and display means for displaying said transformed object image.

According to the present invention as described above, the image display program, for displaying objects to be displayed on a game screen according to the progressing status of a game, causes the video game machine to function as storage means for storing object images which are 2D images created in advance according to the progressing direction of the objects, selection means for selecting the object image based on a perspective transformation with a virtual camera view point as the basis for generating a game screen according to the progressing status of the game, transformation processing means for transforming the selected object image according to the result of the perspective transformation, and display means for displaying the transformed object image.

In other words, the storage means stores object images which are 2D images created in advance according to the progressing direction of the objects to be displayed on the game screen, the selection means selects an object image based on a perspective transformation with a virtual camera view point as the basis for generating a game screen according to the progressing status of the game, the transformation processing means transforms the selected object image according to the result of the perspective transformation, and the display means displays the transformed object.

Therefore, since an object image, which is a 2D image selected based on perspective transformation, is transformed and displayed so that the front side of the object image becomes larger than the rear side thereof in the game space, realistic stereoscopic representation, such as a three-dimensional image, becomes possible using 2D images. Also an object image created in advance is transformed according to the result of the perspective transformation and displayed as another object image, so a plurality of object images can be displayed by preparing a small volume of object images, which makes it unnecessary to store a large volume of 2D images corresponding to the operations of the object, and allows saving storage capacity and implementing a realistic video game corresponding to the detailed operations of the objects.

In the aforementioned form of the invention, the objects may include a character object which represents a character and a panel object which moves along with the character object, the storage means stores a character object image which is a 2D image created in advance according to the progressing direction of the character object, and a panel object image which is a 2D image created in advance according to the progressing direction of the panel object, the selection means selects the character object image and panel object image based on the perspective transformation with the virtual camera view point as the basis for generating the game screen according to the game progressing status, the transformation processing means transforms the selected panel object image according to the result of the perspective transformation, and the display means displays the transformed panel object image along with the selected character object image.

According to the present invention with the aforementioned features, the objects include a character object which represents a character and a panel object which moves along with the character object, the storage means stores a character object image which is a 2D image created in advance according to the progressing direction of the character object, and a panel object image which is a 2D image created in advance according to the progressing direction of the panel object, the selection means selects the character object image and panel object image based on the perspective transformation with the virtual camera view point as the basis for generating the game screen according to the game progressing status, the transformation processing means transforms the selected panel object image according to the result of the perspective transformation, and the display means displays the transformed panel object image along with the selected character object image.

In other words, the storage means stores a character object which is a 2D image created in advance according to the progressing direction of the character object and a panel object image which is a 2D image created in advance according to the progressing direction of the panel object, the selection means selects the character object image and panel object image based on the perspective transformation with the virtual camera view point as the basis for generating the game screen according to the game progressing status, the transformation processing means transforms the selected panel object image according to the result of the perspective transformation, and the display means displays the transformed panel object image along with the selected character object image.

Therefore, since the panel object image, which is a 2D image selected based on the perspective transformation, is transformed and displayed so that the front side of the panel object image becomes larger than the rear side thereof along with the character object image, realistic stereoscopic representation, such as three-dimensional images, becomes possible using 2D images. Also a panel object image transformed according to the result of the perspective transformation is displayed along with the character object image, so a plurality of panel object images can be displayed by preparing a small volume of panel object images, which makes it unnecessary to store a large volume of 2D images, and allows saving storage capacity and implementing a realistic video game corresponding to the detailed operations of the objects.

In the present invention, the selection means comprises calculation means for calculating the angle of the progressing direction of the character object or the panel object by the perspective transformation, and selects a character object image and panel object image according to the calculated angle of the progressing direction.

According to the present invention with the above feature, the selection means comprises calculation means for calculating the angle of the progressing direction of the character object or the panel object by the perspective transformation, and selects a character object image and panel object image according to the calculated angle of the progressing direction.

In other words, the calculation means calculates the angle of the progressing direction of the character object or the panel object, the selection means selects a character object and panel object according to the calculated angle of the progression direction from the character object images and panel object images stored in the storage means, so the character object image and panel object image according to the progressing direction of the character object and panel object can be selected, and displaying the character object and panel object according to the progressing status of the game becomes possible.

In the present invention, the selection means comprises calculation means for calculating the angle to look down on the character object or panel object from the virtual camera view point using the perspective transformation, and the transformation processing means scales the panel object image according to the calculated angle to look down on the object.

According to the present invention with the above feature, the selection means comprises calculation means for calculating the angle to look down on the character object or panel object from the virtual camera view point using the perspective transformation, and the transformation processing means scales the panel object image according to the calculated angle to look down on the object.

In other words, the calculation means calculates the angle to look down on the character object or panel object from the virtual camera view point, and the transformation processing means scales the panel object image according to the calculated angle to look down on the object, so a display with depth, as in three-dimensional images, is possible even if the panel object image is a 2D image.

In the present invention, the selection means further comprises calculation means for calculating a rotation angle of the character object or panel object using the perspective transformation, and the transformation processing means rotates the character object and panel object images according to the calculated rotation angle.

According to the present invention with the above feature, the selection means comprises calculation means for calculating a rotation angle of the character object or panel object using the perspective transformation, and the transformation processing means rotates the character object and panel object images according to the calculated rotation angle.

In other words, the calculation means calculates the rotation angle of the character object or panel object, and the transformation processing means rotates the character object and panel object images according to the calculated rotation angle, so the character object and panel object can be displayed according to various rotation operations, and a variety of expressions corresponding to the progressing direction of the character object and panel object become possible.

In addition, the present invention takes a form of an image display method for displaying objects to be displayed on a game screen according to the progressing status of the game, wherein a video game machine comprises storage means for storing object images, which are 2D images created in advance according to the progressing direction of the objects, and wherein the video game machine executes a selection step for the video game machine to select the object image based on the perspective transformation with the virtual camera view point as the basis for generating a game screen according to the progressing status of the game, a transformation processing step for the video game machine to transform the selected object image according to the result of the perspective transformation, and a display step for the video game machine to display the transformed object image.

According to the present invention in the above described form, the image display method for displaying objects to be displayed on a game screen according to the progressing status of the game, wherein a video game machine comprises storage means for storing object images which are 2D images created in advance according to the progressing directions of the objects, and wherein the video game machine executes a selection step for the video game machine to select the object image based on the perspective transformation with the virtual camera view point as the basis for generating a game screen according to the progressing status of the game, a transformation processing step for the video game machine to transform the selected object image according to the result of the perspective transformation, and a display step for the video game machine to display the transformed object image.

In other words, the storage means that is comprised in the video game machine stores object images, which are 2D images created in advance according to the progressing direction of the objects displayed on the game screen, then in a selection step, the object image is selected based on the perspective transformation with the virtual camera view point as the basis for generating a game screen according to the progressing status of the game, in the transformation processing step, the selected object image is transformed according to the result of the perspective transformation, and the transformed object is displayed in the display step.

Therefore, since the object image, which is a 2D image selected based on the perspective transformation, is transformed and displayed so that the front side of the object image becomes larger than the rear side thereof in the game space, for example, realistic stereoscopic representation, such as three-dimensional images, becomes possible using 2D images. Also an object image created in advance is displayed as another object image by transforming the object image according to the result of the perspective transformation, so a plurality of object images can be displayed by preparing a small volume of object images, which makes it unnecessary to store a large volume of 2D images corresponding to the operations of the objects, and allows saving storage capacity and implementing a realistic video game corresponding to the detailed operations of the objects.

Furthermore, the present invention takes a form of a video game machine for displaying objects to be displayed on a game screen according to the progressing status of the game, comprising storage means for storing object images which are 2D images created in advance according to the progressing direction of the objects, selection means for selecting the object image based on the perspective transformation with a virtual camera view point as the basis for generating a game screen according to the progressing status of the game, transformation processing means for transforming the selected object image according to the result of the perspective transformation, and display means for displaying the transformed object image.

According to the video game machine as described in the above, the video game machine for displaying objects to be displayed on a game screen according to the progressing status of the game comprises storage means for storing object images which are 2D images created in advance according to the progressing direction of the objects, selection means for selecting the object image based on the perspective transformation with a virtual camera view point as the basis for generating a game screen according to the progressing status of the game, transformation processing means for transforming the selected object image according to the result of the perspective transformation, and display means for displaying the transformed object image.

In other words, the storage means stores object images, which are 2D images created in advance according to the progressing direction of the objects displayed on the game screen, the selection means selects the object image based on the perspective transformation with the virtual camera view point as the basis for generating a game screen according to the progressing status of the game, the transformation processing means transforms the selected object image according to the result of the perspective transformation, and the display means displays the transformed object.

Therefore, since the object image, which is a 2D image selected based on the perspective transformation, is transformed and displayed so that the front side of the object image becomes larger than the rear side thereof in the game space, for example, realistic stereoscopic representation, such as three-dimensional images, becomes possible using 2D images. Also an object image created in advance is displayed as another object image by transforming the object image according to the result of the perspective transformation, so a plurality of object images can be displayed by preparing a small volume of object images, which makes it unnecessary to store a large volume of 2D images corresponding to the operations of the objects, and allows saving storage capacity and implementing a realistic video game corresponding to the detailed operations of the objects.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A recording medium (10) storing an image display program to display objects on a game screen according to the progressing status of a game, which causes a video game machine (1) to function as:

    storage means (90) for storing object images which are 2D images created in advance according to a progressing direction of said objects;
    selection means (81) for selecting said object image based on a perspective transformation with a virtual camera view point as the basis for generating a game screen according to the progressing status of the game;
    transformation processing means (71) for transforming said selected object image according to the result of said perspective transformation; and
    display means (20) for displaying said transformed object image,
    **characterized in that**
    said selection means (81) includes calculation means (82) for calculating an angle to look down on said character object or said panel object from said virtual camera view point based on said perspective transformation, and said transformation processing means (71) scales the panel object image according to the calculated angle.

2. The recording medium (10) according to Claim 1, wherein said objects include a character object which represents a character and a panel object which moves along with said character object,
    said storage means (90) stores a character object image which is a 2D image created in advance according to the progressing direction of said character object, and a panel object image which is a 2D image created in advance according to the progressing direction of said panel object,
    said selection means (81) selects said character object image and panel object image based on the perspective transformation with the virtual camera view point as the basis for generating the game screen according to the progressing status of the game,
    said transformation processing means (71) transforms said selected panel object image according to the result of said perspective transformation, and
    said display means (20) display said transformed panel object image along with the selected character object image.

3. The recording medium (10) according to Claim 2, wherein
    said selection means (81) including calculation means (82) for calculating the angle of the progressing direction of said character object or said panel object based on said perspective transformation, and said selection means (81) selects a character object image and panel object image according to the calculated angle of the progressing direction.

4. The recording medium according to Claim 2, wherein said selection means includes calculation means for calculating a rotation angle of said character object or said panel object based on said perspective transformation, and said transformation processing means rotates said character object and panel object images according to the calculated rotation angle.

5. An image display method for displaying objects on a game screen according to the progressing status of the game, wherein a video game machine (1) comprises storage means (90) for storing object images which are 2D images created in advance according to the progressing direction of said objects, and wherein the video game machine (1) executes:

    a selection step for selecting said object image based on a perspective transformation with the virtual camera view point as the basis for generating a game screen according to the progressing status of the game;
    a transformation processing step for transforming said selected object image according to the result of said perspective transformation; and
    a display step for displaying said transformed object image,
    **characterized in that**
    the selection step includes a calculation step for calculating an angle to look down on said character object or said panel object from said virtual camera view point based on said perspective transformation, and in said transformation processing step the panel object image is scaled according to the calculated angle.

6. A video game machine (1) for displaying objects on a game screen according to progressing status of a game, the video game machine (1) comprising:

storage means (90) for storing object images which are 2D images created in advance according to the progressing direction of said objects;

selection means (81) for selecting said object image based on a perspective transformation with a virtual camera view point as the basis for generating a game screen according to the progressing status of the game;

transformation processing means (71) for transforming said selected object image according to the result of said perspective transformation; and

display means (20) for displaying said transformed object image,

**characterized in that**

said selection means (81) includes calculation means (82) for calculating an angle to look down on said character object or said panel object from said virtual camera view point based on said perspective transformation, and said transformation processing means (71) scales the panel object image according to the calculated angle.

7. An image display program to display objects on a game screen according to the progressing status of a game, which causes a video game machine (1) to function as:

storage means (90) for storing object images which are 2D images created in advance according to a progressing direction of said objects;

selection means (81) for selecting said object image based on a perspective transformation with a virtual camera view point as the basis for generating a game screen according to the progressing status of the game;

transformation processing means (71) for transforming said selected object image according to the result of said perspective transformation; and

display means (20) for displaying said transformed object image,

**characterized in that**

said selection means (81) includes calculation means (82) for calculating an angle to look down on said character object or said panel object from said virtual camera view point based on said perspective transformation, and said transformation processing means (71) scales the panel object image according to the calculated angle.

**Patentansprüche**

1. Aufzeichnungsmedium (10), das ein Bilddarstellungsprogramm bzw. Bildanzeigeprogramm speichert, um Gegenstände bzw. Objekte auf einem Spielschirm gemäß dem fortschreitenden bzw. Fortschrittsstatus eines Spiels anzuzeigen bzw. darzustellen, was eine Spielmaschine (1) veranlaßt zu funktionieren als:

Speichermittel (90) zum Speichern von Objektbildern, welche 2D Bilder sind, die im voraus gemäß einer Progressions- bzw. Fortschrittsrichtung dieser Objekte erzeugt bzw. ausgebildet sind;

Auswahlmittel (81) zum Auswählen des Objektbilds basierend auf einer perspektivischen Transformation bzw. Perspektivtransformation mit einem virtuellen Kameragesichtspunkt bzw. -standpunkt als der Basis zum Generieren bzw. Erzeugen eines Spielschirms gemäß dem Fortschrittsstatus des Spiels;

Transformationsbearbeitungsmittel (71) zum Transformieren des gewählten Objektbilds gemäß dem Ergebnis der perspektivischen Transformation; und

Darstellungs- bzw. Anzeigemittel (20) zum Darstellen bzw. Anzeigen des transformierten Objektbilds,

**dadurch gekennzeichnet, daß**

die Auswahlmittel (81) Berechnungsmittel (82) zum Berechnen eines Winkels beinhalten, um auf das Figur- bzw. Charakterobjekt oder das Paneel- bzw. Tafelobjekt von dem virtuellen Kamerastandpunkt basierend auf der perspektivischen Transformation hinunterzuschauen, und die Transformationsbearbeitungsmittel (71) das Paneel- bzw. Tafelobjektbild gemäß dem berechneten Winkel skalieren.

2. Aufzeichnungsmedium (10) nach Anspruch 1, wobei die Objekte ein Figurenobjekt, welches einen Charakter bzw. eine Figur repräsentiert, und ein Paneel- bzw. Tafelobjekt beinhalten, welches sich gemeinsam mit dem Figurenobjekt bewegt,

die Speichermittel (90) ein Figur- bzw. Charakterobjektbild, welches ein 2D Bild ist, das im voraus entsprechend der Fortschrittsrichtung des Figurenobjekts ausgebildet bzw. erzeugt wurde, und ein Paneelobjektbild speichern, welches ein 2D Bild ist, welches im voraus gemäß der Fortschrittsrichtung des Paneelobjekts erzeugt wurde, die Auswahlmittel (81) das Figurenobjektbild und Paneelobjektbild basierend auf der perspektivischen Transformation mit dem virtuellen Kamerastandpunkt als der Basis zum Generieren des Spielschirms gemäß dem Fortschrittsstatus des Spiels auswählen, die Transformationsverarbeitungsmittel (71) das gewählte Paneelobjektbild gemäß dem Ergebnis der perspektivischen Transformation transformieren, und die Anzeigemittel (20) das transformierte Paneelobjektbild gemeinsam mit dem gewählten Figurenobjektbild anzeigen.

3. Aufzeichnungsmedium (10) nach Anspruch 2, wobei die Auswahlmittel (81) Berechnungsmittel (82) zum Berechnen des Winkels der Fortschrittsrichtung des Figurenobjekts oder des Paneelobjekts basierend auf der perspektivischen Transformation beinhalten, und die Auswahlmittel (81) ein Figurenobjektbild und ein Paneelobjektbild gemäß dem berechneten Winkel der Fortschrittsrichtung auswählen.

4. Aufzeichnungsmedium nach Anspruch 2, wobei die Auswahlmittel Berechnungsmittel zum Berechnen eines Rotationswinkels des Figurenobjekts oder des Paneelobjekts basierend auf der perspektivischen Transformation beinhalten, und die Transformationsbearbeitungsmittel die Figurenobjekt- und Paneelobjektbilder entsprechend dem berechneten Rotationswinkel drehen.

5. Bilddarstellungsverfahren zum Darstellen bzw. Anzeigen von Gegenständen bzw. Objekten auf einem Spielschirm gemäß dem fortschreitenden bzw. Fortschrittszustand des Spiels, wobei eine Videospielmaschine (1) Speichermittel (90) zum Speichern von Objekt- bzw. Gegenstandsbildern umfaßt, welche 2D Bilder sind, die im voraus gemäß der Fortschrittsrichtung der Objekte gebildet wurden, und wobei die Videospielmaschine (1) ausführt:

   einen Auswahlschritt zum Auswählen des Objektbilds basierend auf einer perspektivischen Transformation bzw. Perspektivtransformation mit dem virtuellen Kameragesichtspunkt bzw. -standpunkt als der Basis zum Generieren eines Spielschirms gemäß dem Fortschrittsstatus des Spiels;
   einen Transformationsbearbeitungsschritt zum Transformieren des ausgewählten Objektbilds gemäß dem Ergebnis der perspektivischen Transformation; und
   einen Anzeige- bzw. Darstellungsschritt zum Darstellen des transformierten Objektbilds,
   **dadurch gekennzeichnet, daß**
   der Auswahlschritt einen Berechnungsschritt zum Berechnen eines Winkels zum Hinunterschauen auf das Figurenobjekt oder das Paneel- bzw. Tafelobjekt von dem virtuellen Kamerastandpunkt basierend auf der perspektivischen Transformation beinhaltet, und in dem Transformationsbearbeitungsschritt das Tafelobjektbild entsprechend dem berechneten Winkel skaliert wird.

6. Videospielmaschine (1) zum Darstellen bzw. Anzeigen von Gegenständen bzw. Objekten auf einem Spielschirm entsprechend einem fortschreitenden bzw. Fortschrittsstatus eines Spiels, wobei die Videospielmaschine (1) umfaßt:

   Speichermittel (90) zum Speichern von Objektbildern, welche 2D Bilder sind, die im voraus gemäß der Fortschrittsrichtung der Objekte gebildet sind;
   Auswahlmittel (81) zum Auswählen des Objektbilds basierend auf einer perspektivischen Transformation bzw. Perspektivtransformation mit einem virtuellen Kameragesichtspunkt bzw. -standpunkt als der Basis zum Generieren bzw. Erzeugen eines Spielschirms gemäß dem Fortschrittsstatus des Spiels;
   Transformationsbearbeitungsmittel (71) zum Transformieren des ausgewählten Objektbilds gemäß dem Ergebnis der perspektivischen Transformation; und
   Darstellungs- bzw. Anzeigemittel (20) zum Darstellen bzw. Anzeigen des transformierten Objektbilds,
   **dadurch gekennzeichnet, daß**
   die Auswahlmittel (81) Berechnungsmittel (82) zum Berechnen eines Winkels zum Hinunterschauen auf das Figur- bzw. Charakterobjekt oder das Paneel- bzw. Tafelobjekt von dem virtuellen Kamerastandpunkt basierend auf der perspektivischen Transformation beinhalten, und die Transformationsbearbeitungsmittel (71) das Paneelobjektbild gemäß dem berechneten Winkel skalieren.

7. Bilddarstellungsprogramm zum Anzeigen bzw. Darstellen von Gegenständen bzw. Objekten auf einem Spielschirm gemäß dem fortschreitenden bzw. Fortschrittsstatus eines Spiels, welches eine Videospielmaschine (1) veranlaßt zu funktionieren als:

Speichermittel (90) zum Speichern von Objektbildern, welche 2D Bilder sind, die im voraus gemäß einer Fortschrittsrichtung der Objekte erzeugt sind;

Auswahlmittel (81) zum Auswählen des Objektbilds basierend auf einer perspektivischen Transformation bzw. Perspektivtransformation mit einem virtuellen Kameragesichtspunkt bzw. -standpunkt als der Basis zum Generieren bzw. Erzeugen eines Spielschirms gemäß dem Fortschrittsstatus des Spiels;

Transformationsbearbeitungsmittel (71) zum Transformieren des ausgewählten Objektbilds gemäß dem Ergebnis der perspektivischen Transformation; und

Darstellungs- bzw. Anzeigemittel (20) zum Darstellen bzw. Anzeigen des transformierten Objektbilds,
**dadurch gekennzeichnet, daß**

die Auswahlmittel (81) Berechnungsmittel (82) zum Berechnen eines Winkels beinhalten, um auf das Figur- bzw. Charakterobjekt oder das Paneel- bzw. Tafelobjekt von dem virtuellen Kamerastandpunkt basierend auf der perspektivischen Transformation hinunterzuschauen, und die Transformationsbearbeitungsmittel (71) das Paneelobjektbild gemäß dem berechneten Winkel skalieren.

## Revendications

1. Support d'enregistrement (10) stockant un programme d'affichage d'image pour afficher des objets sur un écran de jeu conformément à l'état de progression d'un jeu, qui fait fonctionner une machine de jeu vidéo (1) comme :

   un moyen de stockage (90) pour stocker des images d'objet qui sont des images 2D créées à l'avance conformément à une direction de progression des dits objets ;
   un moyen de sélection (81) pour sélectionner la dite image d'objet sur la base d'une transformation de perspective avec un point de vue d'appareil photographique virtuel comme base pour générer un écran de jeu conformément à l'état de progression du jeu ;
   un moyen de traitement de transformation (71) pour transformer la dite image d'objet sélectionnée, conformément au résultat de la dite transformation de perspective ; et
   un moyen d'affichage (20) pour afficher la dite image d'objet transformée,

   **caractérisé en ce que** :

   le dit moyen de sélection (81) comprend un moyen de calcul (82) pour calculer un angle de vision vers le bas sur le dit objet de personnage ou le dit objet de panneau, à partir du dit point de vue d'appareil photographique virtuel, sur la base de la dite transformation de perspective, et le dit moyen de traitement de transformation (71) met à l'échelle l'image d'objet de panneau conformément à l'angle calculé.

2. Support d'enregistrement (10) selon la revendication 1, dans lequel les dits objets comprennent un objet de personnage qui représente un personnage, et un objet de panneau qui se déplace en même temps que le dit objet de personnage,
   le dit moyen de stockage (90) stocke une image d'objet de personnage qui est une image 2D créée à l'avance conformément à la direction de progression du dit objet de personnage, et une image d'objet de panneau qui est une image 2D créée à l'avance conformément à la direction de progression du dit objet de panneau,
   le dit moyen de sélection (81) sélectionne la dite image d'objet de personnage et la dite image d'objet de panneau sur la base de la transformation de perspective avec le point de vue de l'appareil photographique virtuel comme base pour générer l'écran de jeu conformément à l'état de progression du jeu,
   le dit moyen de traitement de transformation (71) transforme la dite image de panneau sélectionnée conformément au résultat de la dite transformation de perspective, et
   le dit moyen d'affichage (20) affiche la dite image d'objet de panneau transformée en même temps que l'image d'objet de personnage sélectionnée.

3. Support d'enregistrement (10) selon la revendication 2, dans lequel :

   le dit moyen de sélection (81) comprend un moyen de calcul (82) pour calculer l'angle de la direction de progression du dit objet de personnage ou du dit objet de panneau sur la base de la dite transformation de perspective, et le dit moyen de sélection (81) sélectionne une image d'objet de personnage et une image d'objet de panneau conformément à l'angle calculé de la direction de progression.

4. Support d'enregistrement selon la revendication 2, dans lequel le dit moyen de sélection comprend un moyen de calcul pour calculer un angle de rotation du dit objet de personnage ou du dit objet de panneau sur la base de la dite transformation de perspective, et le dit moyen de traitement de transformation fait tourner les dites images d'objet de personnage et d'objet de panneau conformément à l'angle de rotation calculé.

5. Procédé d'affichage d'image pour afficher des objets sur un écran de jeu conformément à l'état de progression du jeu, dans lequel une machine de jeu vidéo (1) comprend un moyen de stockage (90) pour stocker des images d'objet qui sont des images 2D créées à l'avance conformément à la direction de progression des dits objets, et dans lequel la machine de jeu vidéo (1) exécute :

une étape de sélection pour sélectionner la dite image d'objet sur la base d'une transformation de perspective, avec le point de vue d'un appareil photographique virtuel comme base pour générer un écran de jeu conformément à l'état de progression de jeu ;
une étape de traitement de transformation pour transformer la dite image d'objet sélectionnée, conformément au résultat de la dite transformation de perspective ; et
une étape d'affichage pour afficher la dite image d'objet transformée ;

**caractérisé en ce que**
l'étape de sélection comprend une étape de calcul pour calculer un angle de vision vers le bas sur le dit objet de personnage ou le dit objet de panneau à partir du dit point de vue d'appareil photographique virtuel sur la base de la dite transformation de perspective et, dans la dite étape de traitement de transformation, l'image d'objet de panneau est mise à l'échelle conformément à l'angle calculé.

6. Machine de jeu vidéo (1) pour afficher des objets sur un écran de jeu conformément à l'état de progression d'un jeu, la machine de jeu vidéo (1) comprenant :

un moyen de stockage (90) pour stocker des images d'objet qui sont des images 2D créées à l'avance conformément à une direction de progression des dits objets ;
un moyen de sélection (81) pour sélectionner la dite image d'objet sur la base d'une transformation de perspective avec un point de vue d'appareil photographique virtuel comme base pour générer un écran de jeu conformément à l'état de progression du jeu ;
un moyen de traitement de transformation (71) pour transformer la dite image d'objet sélectionnée, conformément au résultat de la dite transformation de perspective ; et
un moyen d'affichage (20) pour afficher la dite image d'objet transformée,

**caractérisé en ce que** :

le dit moyen de sélection (81) comprend un moyen de calcul (82) pour calculer un angle de vision vers le bas sur le dit objet de personnage ou le dit objet de panneau, à partir du dit point de vue d'appareil photographique virtuel, sur la base de la dite transformation de perspective, et le dit moyen de traitement de transformation (71) met à l'échelle l'image d'objet de panneau conformément à l'angle calculé.

7. Programme d'affichage d'image pour afficher des objets sur un écran de jeu conformément à l'état de progression d'un jeu, qui fait fonctionner une machine de jeu vidéo comme:

un moyen de stockage (90) pour stocker des images d'objet qui sont des images 2D créées à l'avance conformément à une direction de progression des dits objets ;
un moyen de sélection (81) pour sélectionner la dite image d'objet sur la base d'une transformation de perspective avec un point de vue d'appareil photographique virtuel comme base pour générer un écran de jeu conformément à l'état de progression du jeu ;
un moyen de traitement de transformation (71) pour transformer la dite image d'objet sélectionnée, conformément au résultat de la dite transformation de perspective ; et
un moyen d'affichage (20) pour afficher la dite image d'objet transformée,

**caractérisé en ce que** :

le dit moyen de sélection (81) comprend un moyen de calcul (82) pour calculer un angle de vision vers le bas sur le dit objet de personnage ou le dit objet de panneau, à partir du dit point de vue d'appareil photographique virtuel, sur la base de la dite transformation de perspective, et le dit moyen de traitement de transformation (71) met à l'échelle l'image d'objet de panneau conformément à l'angle calculé.

# FIG.1

EP 1 316 342 B1

# FIG.2

EP 1 316 342 B1

# FIG.3

**70** IMAGE PROCESSING SECTION
**71** TRANSFORMATION PROCESSING SECTION

**80** PROGRAM EXECUTING SECTION
**81** SELECTION SECTION
**82** CALCULATION SECTION

**90** DATA STORING SECTION
**91** OBJECT IMAGE STORING SECTION
**92** CHARACTER IMAGE STORING SECTION
**93** PANEL OBJECT IMAGE STORING SECTION

**100** PROGRAM STORING SECTION
**101** RECORDING MEDIUM

**110** DISPLAY SECTION

EP 1 316 342 B1

FIG.4

# FIG.5

```
              ┌─────────────┐
              │    START    │
              └─────────────┘
                     │
      ┌──────────────┼
      │              ▼
      │   ┌──────────────────────────────┐
      │   │       MOVES CHARACTER         │──── S1
      │   └──────────────────────────────┘
      │              │
      │              ▼
      │   ┌──────────────────────────────┐
      │   │ MOVES VIRTUAL CAMERA VIEW POINT│──── S2
      │   └──────────────────────────────┘
      │              │
      │              ▼
      │   ┌──────────────────────────────┐
      │   │  SELECTION PROCESSING FOR     │──── S3
      │   │  CHARACTER IMAGE AND          │
      │   │  SNOWBOARD IMAGE              │
      │   └──────────────────────────────┘
      │              │
      │              ▼
      │   ┌──────────────────────────────┐
      │   │   TRANSFORMATION PROCESSING   │──── S4
      │   └──────────────────────────────┘
      │              │
      │              ▼
      │   ┌──────────────────────────────┐
      │   │           DISPLAY             │──── S5
      │   └──────────────────────────────┘
      │              │
      └──────────────┘
```

# FIG.6

```
┌─────────────────────────────┐
│ SELECTION PROCESSING FOR    │
│ CHARACTER IMAGE AND         │
│ SNOWBOARD IMAGE             │
└─────────────────────────────┘
              │
              ▼
┌─────────────────────────────┐
│ CALCULATES ANGLE OF         │──── S31
│ PROGRESSING DIRECTION       │
└─────────────────────────────┘
              │
              ▼
┌─────────────────────────────┐
│ CALCULATES LOOK DOWN ANGLE  │──── S32
└─────────────────────────────┘
              │
              ▼
┌─────────────────────────────┐
│ CALCULATES ROTATION ANGLE   │──── S33
└─────────────────────────────┘
              │
              ▼
┌─────────────────────────────┐
│ SELECTS CHARACTER IMAGE     │──── S34
│ AND SNOWBOARD IMAGE         │
└─────────────────────────────┘
              │
              ▼
        ┌──────────┐
        │  RETURN  │
        └──────────┘
```

# FIG.7A

# FIG.7B

# FIG.7C

# FIG.8

## FIG.9A

## FIG.9B

## FIG.9C

FIG.10

EP 1 316 342 B1

FIG.11

501

510

502b

503b

EP 1 316 342 B1

# FIG.12